# EUROPEAN PATENT APPLICATION

(11) **EP 1 507 163 A2**
(43) Date of publication of application: **16.02.2005**
(21) Application number: 04254819.8
(22) Date of filing: 10.08.2004
(51) Int. Cl.: G02F 1/1337

(54) **A liquid crystal display**

(30) Priority: 12.08.2003 GB 0318919; 13.08.2003 GB 0319036
(71) Applicant: VARINTELLIGENT (BVI) LIMITED, Tortola, British Virgin Islands (VG)
(72) Inventor: Gao, Zhi Qiang, Tseung Kwan O Hong Kong (CN); Yeung, Steve Wai Leung, Tseung Kwan O Hong Kong (CN); Lee, George, Tseung Kwan O Hong Kong (CN)
(74) Representative: Johnson, Terence Leslie

(57) **Abstract**

According to the invention there is provided a liquid crystal display device comprising at least two substrates (1,7), a homeotropic alignment film (3,5) coated on said substrates, and a nematic liquid crystal mixture (4) between adjacent substrates.

## Description

The present invention generally relates to the field of liquid crystal display (LCD) devices. More specifically, the present invention relates to a vertical aligned liquid crystal display device and a method of producing such liquid crystal display devices.

Vertical alignment is very important in high resolution and projection display because of it's low dark state and high contrast. The normally black mode can make both TFT display and Liquid Crystal On Silicon Microdisplay have better contrast and colour performance. In this application, the substrates can be, for example, ITO glass or CMOS silicon wafer coated with the alignment layer and then filled with liquid crystal having negative dielectric anisotropy.

There are many methods to get vertical alignment, both dry and wet methods : Polyimmide solution , SiOx , SixNy, Calcium Flouride and Ion Milling of organic polymer layers.

Wet methods have the advantages of a mature process and quick cycle time. However, the necessary mechanical buffing process generates a lot of dust and dirt which greatly affects the final yield. The impact of this will be greatest in small pixel size displays. Reliability is also an issue for polyimmides: strong and prolonged light intensity will deteriate the performance of this polymer coating so that both brightness and color changes.

Dry methods can eliminate the buffing process and also give better light stability. SiOx is the most common method to generate homeotropic alignment. Conventional inorganic alignment layers can be made by a two-step angle vapor deposition process, in order to get pretilt angle and uniformity. There are two major problems: sensitivity to incident angle and thickness control. A small change in deposition angle or thickness can lead to variety of performance, with the result that it is difficult to use this method in mass production. Moreover, a two step deposition is not cost effective. The cycle time for each deposition will be as long as more than one hour, so that the throughput rate will be very low.

It is an object of the invention to seek to mitigate these disadvantages.

According to the invention there is provided a liquid crystal display device comprising a plurality of substrates, a homeotropic alignment film coated on said substrates, and a nematic liquid crystal mixture between adjacent substrates.

In an LCD embodying the invention, there is provided a liquid crystal display of the transmissive-type, reflective-type or transflective-type with single or multi-domains, and homeotropic or tilted homeotropic- alignment layer(s) having a high photostability, high contrast and stable pretilt angle.

The present invention demonstrates a simple and cost effective way to make an alignment layer. One step deposition generates the desired properties in a short cycle time.

The present invention provides a feasible method to make an alignment layer on both ITO glass and silicon wafer with the same homeotropic alignment properties. The ITO glass can be normal polished sodalime glass for TN/STN LCD display, or index matching multi-layer ITO borosilicate glass for reflective mode microdisplay. The silicon wafer can be a bare polished reflective wafer or a CMOS Al mirror surface treated silicon wafer. A single Fluorinated-Diamond like Carbon (F-DLC) layer may be deposited onto the substrates with fluorinated gases by oblique plasma deposition method.

In the present invention, a homeotropic or tilted homeotropic alignment liquid crystal display device having the same alignment film is provided. The deposition chamber for this thin film deposition may have a deposition source, and a substrate held obliquely with an angle defined so that the incident angle of the molecules with respect to the substrate normal forms an oblique angle.

The alignment layer can be formed with plasma enhanced chemical vapor deposition or sputtering deposition. The substrate can be grounded or floated. An external power supply which connects to the substrate may provide a desired bias, during the deposition. The bias range can be +1000V to -1000V, preferably +300V to -300V. The thickness of the fluorinated carbon alignment layer may be from about 5nm to 2000nm. The film can also contain less than 15%, preferably less than 5%, other constituent of other elements, such as Si, O, Ar, N, Ne, Kr, He, Al, Fe, Cr, Ni, Cu, Zn, Co, Mg,Ag, Pt, Ca, B, Cl, Br, I, In Sn, Pb, Ta, Ti, V, Ba ,Na, K, Li, Mn, Ga, Ge, Sb, P, S, Se, etc. or a mixture of the above elements.

The deposition may be a work gas or gas mixture to form the plasma. The gas can be hydrocarbon gas, hydrogen gas, fluorinated hydrocarbon gas, or a mixture of the above. The preferred gas includes, but is not limited to, CH₄, C₂H₂, C₂H₄, C₂H₆, H₂, HF, CFH₃, CF₂H₂, CF₃H, CF₄, C₂F₆, C₄F₈, etc.

The vacuum chamber using for this present invention may have a vacuum range from 100 Torr to 1x10^6

The attached drawings are illustrations to help understand the equipment and cell structure using in the present invention. They will be referred in the detail description and the concept will be better understood with reference to these drawings.
Figure 1 : An illustration to show the cell structure of the liquid crystal display with the inorganic alignment layer.
Figure 2 : An illustration of the depostion chamber to show relative position and assignment of various parts. Alignment is deposted onto the substrate by an oblique angle with plasma enhanced chemical vapor deposition.
Figure 3 : Transmissive homeotropic aligned liquid crystal display with 20um cell gap for pretilt measurement by cell rotation method.
Figure 4 : Isogyre diagram observed under microscope with Bertrand lens showing interference pattern of uniaxial structure.

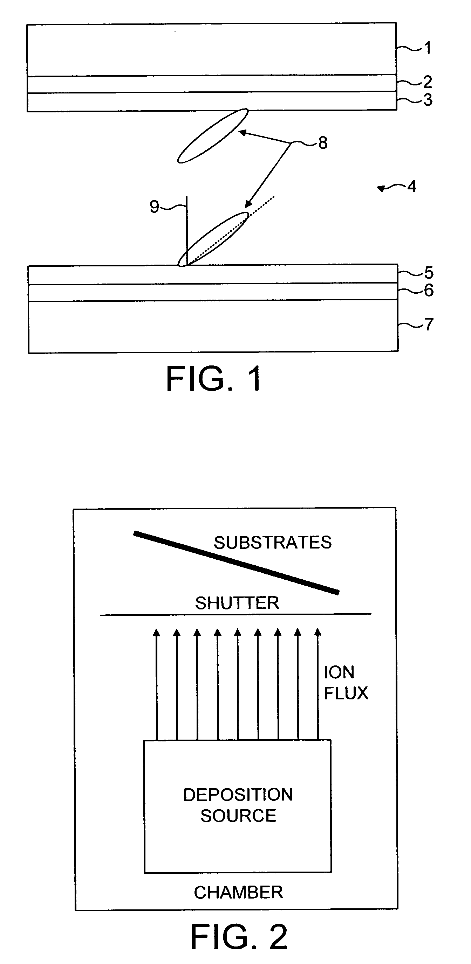

The basic cell structure of a tilted homeotropic liquid crystal display according to the invention is illustrated in figure 1. It can be a transmissive, reflective or transflective liquid crystal display with substrates (1, 7), conductive electrodes (2,6) and alignment layers (3,5). It is filled with liquid crystal (4) with negative dielectric anisotropy. A molecule of liquid crystal (8) is aligned with respect to the normal of the substrate to define an oblique tilted angle (9).

Substrates (1,7) of the homeotropic liquid crystal display have a thickness substantially within a range of 0.1 to 5mm, and more preferably 0.2 to 3mm. The thickness can be different, depending on what materials used. The substrate can be a multi-layer structure for design purpose, for example, CMOS silicon wafer with Al metal as mirror surface.

Conductive electrodes (2,6) are provided, having a thickness with range from 10A to 5000A and more preferably 100A to 2000A. The thickness of the electrodes may be different or multi-layered depending on the film properties.

Inorganic alignment films (3,5) for liquid crystal alignment are provided, having a thickness substantially within a range of 50 to 20000A and more preferably 100A to 2000A. The thickness of the alignment layer may be different or multi-layered depending on the film properties.

A liquid crystal (4) is also provided which has an negative dielectric anisotropy. It is supplied by E.M. Merck Corporation with model MLC-6608, MLC6609 and MLC6610. Other suitable liquid crystals with negative anisotropy from other vendors are also applicable.

For a reflective mode display with tilted homeotropic alignment with the same structure as Figure 1, the substrates (1,7) have the conductive electrodes (2,6) on top. The inorganic alignment films (3,5) are deposited by plasma enhanced chemical vapor deposition with oblique angle. Liquid crystal molecules (8) align on the alignment layer with a defined oblique angle with respect to the substrate normal (9). The uniformity and the magnitude of the pretilt angle can be measured or showing in the contrast of the display.

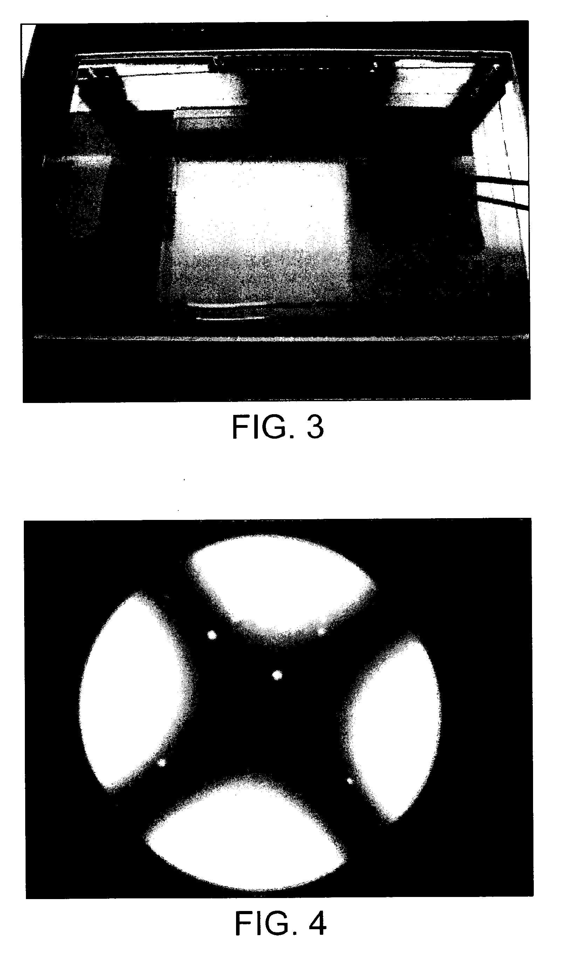

A high quality homeotropic liquid crystal display must show a uniform contrast on the cell . A direct inspection can be done by observing the on/off performance under a cross polarizer. There should no any color change observed in the off state. The pretilt angle can be measured by a cell rotation method and checking with isogyre diagram. Figure 3 shows a transmissive display with a cell gap 20 um for the cell rotation method. The isogyre diagram shows the vertical alignment properties with pretilt angle. A reflective mode microdisplay with pixel 12 um in size is also formed and shows good homeotropic alignment.

In figure 2, a schematic diagram of a thin film deposition system is shown. The system includes a vacuum chamber with a deposition source, a shutter, and a substrate being processed. The substrate is located at an oblique angle with respect to the substrate normal. The alignment layer can be formed with plasma enhanced chemical vapor deposition or sputtering deposition. The substrate can be grounded or floated. An external power supply which connects to the substrate provides a desired bias, during the deposition. The bias range is +300V to -300V. For the experiment done by the inventor, the thickness of the fluorinated carbon alignment layer is from about 100A to 1000A. The deposition uses a work gas or gas mixture to form the plasma. The gas can be hydrocarbon gas, hydrogen gas, fluorinated hydrocarbon gas, or a mixture of the above. The preferred gas includes, but is not limited to , CH₄, C₂H₂, C₂H₄, C₂H₆, H₂, HF, CFH₃, CF₂H₂, CF₃H, CF₄, C₂F₆, C₄F₈, etc. The vacuum chamber used for this present invention has a vacuum range from 100 Torr to 1x10^6

Thus, the present invention provides a photo-stable homeotropic-alignment or tilted homeotropic alignment liquid crystal display. While the invention has been described in terms of several preferred embodiments, those skilled in the art will recognize that the invention can be practiced with modification within the spirit and scope of the appended claims.

## Claims

1. A liquid crystal display device comprising at least two substrates, a homeotropic alignment film coated on said substrates, and a nematic liquid crystal mixture between adjacent substrates.

2. A device according to claim 1, wherein said homeotropic-alignment film comprises a tilted homeotropic-alignment film.

3. A device according to claim 1, wherein said homeotropic alignment film comprises a single-domain, two-domain or four-domain homeotropic-alignment film.

4. A device according to any preceding claim, wherein the homeotropic alignment film comprises an amorphous fluorinated carbon film.

5. A device according to claim 4, wherein said fluorinated carbon homeotropic-alignment film comprises hydrogen.

6. A device according to claim 4 or claim 5, wherein said fluorinated carbon homeotropic-alignment film comprises less than 15%, preferably less than 5%, impurities of other elements, such as Si, O, Ar, N, Ne, Kr, He, Al, Fe, Cr, Ni, Cu, Zn, Co, Mg, Ag, Pt, Au, Ca, B, Cl, Br, I, In, Sn, Pb, Ta, Ti, V, Ba, Na, K, Li, Mn, Ga, Ge, Sb, P, S, Se etc. or a mixture of the above elements.

7. A device according to any preceding claim, wherein said homeotropic-alignment film has a thickness in the range 5nm to 2000nm, preferably 10nm to 100nm.

8. A device according to any preceding claim, wherein said homeotropic-alignment film has more than 50% transparency in the visible light range, preferably higher than 75%.

9. A device according to any preceding claim, wherein said homeotropic-aligment film can be insulating or conducting, the resistivity range being from 1 x 10² to 1x10^{14,}Ωcm.

10. A device according to any preceding claim, the device being passively driven.

11. A device according to any of claims 1 to 9, the device being actively driven.

12. A device according to claim 11, wherein said active driving is realized by a thin film transistor.

13. A device according to claim 11, wherein said active driving is realized by CMOS.

14. A device according to any preceding claim, wherein each of said substrates comprises an electrode comprising a coated conductive film.

15. A device according to claim 14, comprising a buffer layer on top of said electrodes to reduce leakage current of device and/or to improve optical coupling and/or to reduce the thickness of said alignment layer.

16. A device according to any preceding claim, wherein said homeotropic-alignment film is formed by plasma enhanced chemical vapor deposition.

17. A device according to any of claims 1 to 15, wherein said homeotropic-alignment film is formed by sputtering deposition.

18. A method for producing a liquid crystal display device according to any of claims 1 to 15, wherein said homeotropic alignment film is formed by sputtering deposition.

19. A method for producing a liquid crystal display device according to any of claims 1 to 15, wherein said homeotropic alignment film is formed by plasma enhanced chemical vapor deposition.

20. A method according to claim 18 or claim 19, wherein each substrate is held at an angle to the deposition source during deposition of the homeotropic-alignment film.

21. A method according to claim 20, wherein the angle between the plane of the substrate and the plane of deposition is between ±0° and ±90°, preferably between ±1° and ±90°.

22. A method according to claim 20, wherein the angle between the plane of the substrate and the plane of deposition is between ±0 and ±89°, preferably between ±1° and ±89°.

23. A method according to any of claims 19 to 22, wherein said plasma enhanced chemical vapor deposition is carried out by apparatus comprising a substrate holder to hold a substrate, a plasma means for forming plasma from work gas by a power supply, and a vacuum chamber.

24. A method according to any of claims 19 to 23, wherein said plasma is a capacitor couple DC and/or RF plasma.

25. A method according to claims 19 to 23, wherein said plasma is an inductor couple RF plasma.

26. A method according to any of claims 19 to 23, wherein said plasma is a microwave induced plasma or electron cyclotron resonance microwave plasma.

27. A method according to any of claims 23 to 26, wherein said work gas is selected from the group consisting hydrocarbon gas, hydrogen gas, fluorinated hydrocarbon gas, or a mixture thereof.

28. A method according to claim 27, wherein the work gas is selected from the group consisting of C₂H₂, C₂H₄, C₂H₆, HF, CFH₃, CF₂H₂, CF₃H, CF₄, C₂F₆, C₄F₈, etc.

29. A method according to claim 18 or 20 to 22, wherein said sputtering deposition is carried out by apparatus comprising a target, a substrate holder to hold a substrate, a plasma means for forming plasma between the target and the substrate holder, and a vacuum chamber.

30. A method according to claim 29, wherein said target comprises graphite, PTFE and any other solid materials which mainly contains carbon element.

31. A method according to claim 29 or claim 30, wherein said plasma is a DC or RF plasma.

32. A method according to any of claims 29 to 31, wherein said work gas is selected from the group consisting of AR, HE, Kr, N₂, hydrocarbon gas, hydrogen gas, fluorinated hydrocarbon gas, or a mixture thereof.

33. A method according to claim 32, wherein said work gas is selected from the group consisting of CH₄, C₂H₂, C₂H₄, C₂H₆, h₂, HF, CFH₃, CF₂H₂, CF₃H, CF₄, C₂F₆, C₄F₈.

34. A method according to any of claims 23 to 33, wherein said substrate holder is ground or floating.

35. A method according to any of claims 23 to 34, wherein said substrate holder is biased during the deposition, the bias range being +1000V to -1000V, preferably +300V to -300V.

36. A method according to claim 35, wherein said substrate bias is DC or pulse bias with any waveform.

37. A method according to any of claims 23 to 36, wherein said substrate has a temperature range from RT to 600°C.

38. A method according to any of claims 23 to 37, wherein said substrate holder can be rotated, moved or fixed.

39. A method according to any of claims 23 to 38, wherein said vacuum chamber has a vacuum range from 760 Torr to 1x10⁻⁶ Torr, preferably from 10 Torr to 1x10⁻⁵ Torr.

40. A liquid crystal display device, comprising:
a pair of substrates;
a homeotropic-alignment film coated on said substrates and comprising an amorphous fluorinated carbon film;
a nematic liquid crystal mixture with a negative dielectric anisotropy is aligned by said homeotropic-alignment film without using a homeotropic alignment agent, wherein said amorphous fluorinated carbon film is a solid thin film at least comprises of elements of F and C.
